# FASCICULE DE BREVET EUROPEEN

(11) **EP 3 699 091 B1**
(45) Date de publication et mention de la délivrance du brevet: **15.12.2021**
(21) Numéro de dépôt: 20152222.4
(22) Date de dépôt: 16.01.2020
(51) Int. Cl.: B64D 27/26

(54) **STRUCTURE PRIMAIRE D'UN MÂT D'AÉRONEF COMPORTANT AU MOINS UN RENFORT TRANSVERSAL ÉQUIPÉ DE DEUX BIELLES DISPOSÉES EN DIAGONALE ET AÉRONEF COMPRENANT UNE TELLE STRUCTURE PRIMAIRE**
PRIMÄRSTRUKTUR EINES FLUGZEUGTRIEBWERKTRÄGERS, DIE MINDESTENS EINE QUERVERSTEIFUNG MIT ZWEI DIAGONAL ANGEORDNETEN STREBEN UMFASST, UND LUFTFAHRZEUG MIT EINER SOLCHEN PRIMÄRSTRUKTUR
PRIMARY STRUCTURE OF AN AIRCRAFT MOUNT COMPRISING AT LEAST ONE TRANSVERSE REINFORCEMENT PROVIDED WITH TWO RODS ARRANGED DIAGONALLY AND AIRCRAFT COMPRISING SUCH A PRIMARY STRUCTURE

(30) Priorité: 22.02.2019 FR 1901850
(43) Date de publication de la demande: 26.08.2020
(73) Titulaire: Airbus Operations SAS, 31060 Toulouse (FR)
(72) Inventeur: GLEIZE, Olivier, 31060 Toulouse Cedex 9 (FR)
(74) Mandataire: Fantin, Laurent

(56) Documents cités:
- CN-A- 109 606 703
- FR-A1- 2 891 803
- US-A- 6 126 110
- US-A1- 2011 121 132

## Description

La présente invention se situe dans le domaine des mâts d'aéronef, illustré par le document FR-A1-2891803. L'invention se rapporte à une structure primaire d'un mât d'aéronef comportant au moins un renfort transversal équipé de deux bielles disposées en diagonale ainsi qu'à un aéronef comprenant au moins une telle structure primaire.

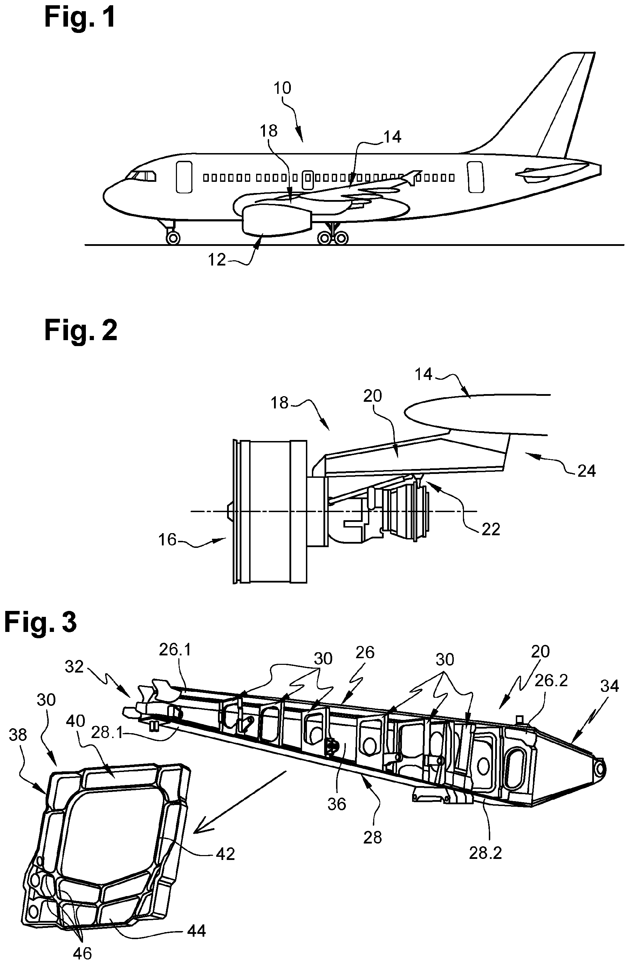

Selon un mode de réalisation visible sur les figures 1 et 2, un aéronef 10 comprend plusieurs ensembles propulseurs 12 positionnés sous chacune des ailes 14 de l'aéronef. Chaque ensemble propulseur 12 comprend un moteur 16, une nacelle (non représentée sur la figure 2) positionnée autour du moteur 16 et un mât 18 reliant le moteur 16 et l'aile 14. Le mât 18 comprend une structure primaire 20 qui est reliée au moteur 16 par une attache-moteur 22 et à l'aile 14 par une attache-voilure 24.

Selon un mode de réalisation visible sur la figure 3, la structure primaire 20 comprend :
- un longeron supérieur 26,
- un longeron inférieur 28,
- des renforts transversaux 30 qui relient les longerons supérieur et inférieur 26, 28, qui sont disposés dans des plans transversaux et qui ont chacun un contour approximativement carré ou rectangulaire,
- un élément d'extrémité avant 32 qui relie une extrémité avant 26.1 du longeron supérieur 26 et une extrémité avant 28.1 du longeron inférieur 28,
- un élément d'extrémité arrière 34 qui relie une extrémité arrière 26.2 du longeron supérieur 26 et une extrémité arrière 28.2 du longeron inférieur 28,
- deux panneaux latéraux droit et gauche 36 disposés de part et d'autre des renforts transversaux 30.

Chaque renfort transversal 30 comprend un cadre extérieur 38 contre lequel sont plaqués les longerons supérieur et inférieur 26, 28 et les panneaux latéraux droit et gauche 36 ainsi qu'une âme 40 configurée pour renforcer le cadre extérieur 38.

Cette âme 40 comprend un cadre intérieur 42, un voile 44, positionné dans un plan transversal, reliant les cadres extérieur et intérieur 38, 42 ainsi qu'une pluralité de nervures 46, perpendiculaires au voile 44.

Selon un mode de réalisation, chaque renfort transversal 30 est réalisé en titane par forgeage. Compte tenu de sa géométrie, chaque renfort transversal a une masse relativement importante. De plus, il est réalisé à partir d'une ébauche volumineuse nécessitant une presse de forte puissance pour la forger.

La présente invention vise à remédier à tout ou partie des inconvénients de l'art antérieur. A cet effet, l'invention a pour objet une structure primaire d'un mât d'aéronef comprenant des longerons supérieur et inférieur, des panneaux latéraux droit et gauche, des renforts transversaux disposés dans des plans transversaux, présentant chacun un contour carré ou rectangulaire et au moins une semelle contre laquelle sont fixés les longerons supérieur et inférieur ainsi que les panneaux latéraux droit et gauche. Selon l'invention, au moins un des renforts transversaux de la structure primaire comprend des première et deuxième bielles, orientées selon des diagonales du renfort transversal, présentant chacune des première et deuxième extrémités, ainsi que des systèmes de liaison reliant chacune des premières et deuxièmes extrémités des première et deuxième bielles à la semelle ou à l'une des semelles. Cette conception permet de réduire le volume de matière de chaque renfort transversal. De plus, elle permet de libérer une section de passage importante au centre du renfort transversal facilitant l'intégration des éléments à l'intérieur de la structure primaire.

Selon une autre caractéristique, au moins une des première et deuxième bielles est réglable en longueur.

Selon une autre caractéristique, chaque système de liaison comprend au moins un voile reliant l'une des premières et deuxièmes extrémités des première et deuxième bielles à la semelle ou à l'une des semelles, chaque voile étant une paroi de faible épaisseur, disposée dans un plan transversal, solidaire de la semelle ou de l'une des semelles. En complément, chaque système de liaison comprend un axe de liaison pivotante reliant l'une des extrémités des première et deuxième bielles à au moins l'un des voiles, ledit axe de liaison pivotante étant orienté selon une direction longitudinale.

Selon une première configuration, chaque système de liaison comprend un voile et la première ou deuxième extrémité de la première ou deuxième bielle comprend une fente configurée pour loger le voile.

Selon une deuxième configuration, chaque système de liaison comprend deux voiles entre lesquels est positionnée la première ou deuxième extrémité de la première ou deuxième bielle.

Selon un premier mode de réalisation, le renfort transversal comprend un cadre extérieur qui s'étend de manière continue sur tout le pourtour du renfort transversal entre un premier bord positionné dans un premier plan transversal et un deuxième bord positionné dans un deuxième plan transversal, parallèle au premier plan transversal et décalé par rapport à ce dernier selon une direction longitudinale, ledit cadre extérieur comportant une surface extérieure formant la semelle.

Selon ce premier mode de réalisation, le cadre extérieur comprend deux voiles principaux qui s'étendent sur deux côtés parallèles du cadre extérieur, dans un plan transversal, à équidistance des premier et deuxième bords, et pour chacune des extrémités des première et deuxième bielles, des voiles secondaires, parallèles aux voiles principaux, espacés de ces derniers.

Selon ce premier mode de réalisation, les voiles secondaires reliés à la première bielle sont décalés par rapport au voile principal vers le premier bord alors que les voiles secondaires reliés à la deuxième bielle sont décalés par rapport au voile principal vers le deuxième bord. Selon un deuxième mode de réalisation, le renfort transversal comprend quatre cornières en L, positionnées au niveau de chaque angle du renfort transversal, disjointes et reliées deux à deux par les première et deuxième bielles, chacune des quatre cornières en L présentant une surface extérieure formant une semelle.

Selon ce deuxième mode de réalisation, les quatre cornières en L présentent des premiers bords, coplanaires, positionnés dans un premier plan transversal et des deuxièmes bords positionnés dans un deuxième plan transversal, parallèle au premier plan transversal et décalé par rapport à ce dernier selon une direction longitudinale. En complément, chaque cornière en L présente un unique voile, positionné au niveau du premier bord pour les cornières en L reliées à la première bielle ou au niveau du deuxième bord pour les cornières en L reliées à la deuxième bielle.

Selon un troisième mode de réalisation, le renfort transversal comprend deux cornières en U disjointes, reliées par les première et deuxième bielles, chaque cornière en U présentant une surface extérieure formant une semelle, une base et deux branches.

Selon ce troisième mode de réalisation, les deux cornières en U présentent des premiers bords, coplanaires, positionnés dans un premier plan transversal et des deuxièmes bords positionnés dans un deuxième plan transversal, parallèle au premier plan transversal et décalé par rapport à ce dernier selon une direction longitudinale. En complément, chaque cornière en U comprend un voile principal reliant les deux branches, positionné dans un plan transversal, à équidistance des premier et deuxième bords, et pour chacune des extrémités des première et deuxième bielles, des voiles secondaires, parallèles au voile principal, espacés de ce dernier.

Selon ce troisième mode de réalisation, pour chaque cornière en U, le voile secondaire relié à la première bielle est décalé par rapport au voile principal vers le premier bord alors que le voile secondaire relié à la deuxième bielle est décalé par rapport au voile principal vers le deuxième bord.

L'invention a également pour objet un aéronef comprenant une structure primaire selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une représentation schématique latérale d'un ensemble propulsif (la nacelle n'étant pas représentée),
- La figure 3 est une vue en perspective d'une structure primaire d'un mât d'aéronef et d'un renfort transversal illustrant un mode de réalisation de l'art antérieur,
- La figure 4 est une vue en perspective d'un renfort transversal d'une structure primaire d'un mât d'aéronef qui illustre un premier mode de réalisation de l'invention,
- La figure 5 est une coupe transversale d'une structure primaire d'un mât d'aéronef comportant au moins un renfort transversal visible sur la figure 4,
- La figure 6 est une vue en perspective d'un renfort transversal d'une structure primaire d'un mât d'aéronef qui illustre un deuxième mode de réalisation de l'invention,
- La figure 7 est une coupe transversale d'une structure primaire d'un mât d'aéronef comportant au moins un renfort transversal visible sur la figure 6,
- La figure 8 est une vue en perspective d'un renfort transversal d'une structure primaire d'un mât d'aéronef qui illustre un troisième mode de réalisation de l'invention,
- La figure 9 est une coupe transversale d'une structure primaire d'un mât d'aéronef comportant au moins un renfort transversal visible sur la figure 8, et
- La figure 10 est une vue en perspective d'un renfort transversal d'une structure primaire d'un mât d'aéronef qui illustre un quatrième mode de réalisation de l'invention.

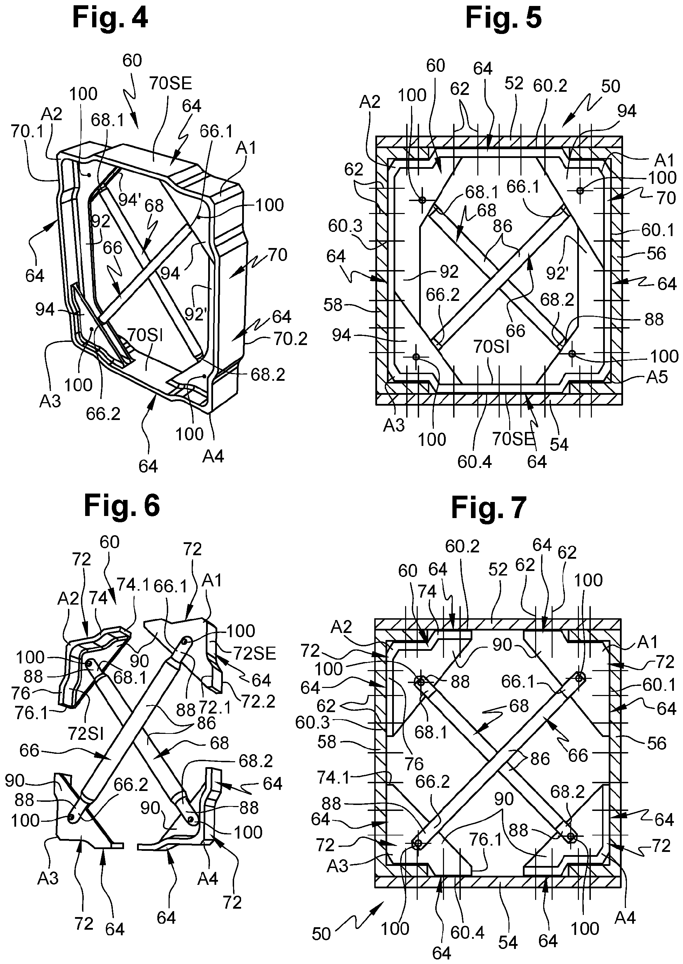

Selon des modes de réalisation visibles sur les figures 5, 7 et 9, une structure primaire 50 d'un mât d'aéronef comprend notamment :
- des longerons supérieur et inférieur 52, 54,
- des panneaux latéraux droit et gauche 56, 58,
- des renforts transversaux 60, disposés dans des plans transversaux, qui ont chacun un contour approximativement carré ou rectangulaire et qui relient les longerons
supérieur et inférieur 52, 54 ainsi que les panneaux latéraux droit et gauche 56, 58. Pour la suite de la description, une direction longitudinale est perpendiculaire aux plans transversaux.

Selon un premier mode d'assemblage, lors d'une première étape, des cornières sont fixées sur les bords des longerons supérieur et inférieur 52, 54. Ainsi, chaque longeron supérieur ou inférieur 52, 54 équipé de deux cornières a une forme en U. Lors d'une deuxième étape, les renforts transversaux 60 sont insérés entre les branches des formes en U des longerons supérieur et inférieur 52, 54 équipés des cornières. Lors d'une dernière étape les panneaux latéraux droit et gauche 56, 58 sont mis en place.

Selon un autre mode de réalisation illustré par les figures 5, 7 et 9, chaque panneau latéral droit ou gauche 56, 58 a une forme en U. Les renforts transversaux 60 sont insérés entre les branches des formes en U. Enfin, les longerons supérieur et inférieur 52, 54 sont mis en place. Les panneaux latéraux droit et gauche 56, 58, les longerons supérieur et inférieur 52, 54 sont reliés aux renforts transversaux 60 par des éléments de liaison 62.

Les longerons supérieur et inférieur 52, 54, les panneaux latéraux droit et gauche 56, 58 ainsi que le mode d'assemblage ne sont pas plus décrits car ils peuvent être identiques à ceux de l'art antérieur.

Chaque renfort transversal 60 a un pourtour approximativement carré ou rectangulaire et présente un premier angle A1 reliant un côté droit 60.1 et un côté supérieur 60.2, un deuxième angle A2 reliant le côté supérieur 60.2 et un côté gauche 60.3, un troisième angle A3 reliant le côté gauche 60.3 et un côté inférieur 60.4 ainsi qu'un quatrième angle A4 reliant le côté inférieur 60.4 et le côté droit 60.1.

Selon les modes de réalisation visible sur les figures 4 à 10, au moins un des renforts transversaux 60 de la structure primaire 50 comprend :
- au moins une semelle 64, contre laquelle sont fixés les longerons supérieur, inférieur 52, 54 et les panneaux latéraux droit, gauche 56, 58,
- des première et deuxième bielles 66, 68, orientées selon des diagonales du renfort transversal 60, présentant chacune des première et deuxième extrémités 66.1, 66.2, 68.1, 68.2, et
- des systèmes de liaison reliant chacune des première et deuxième extrémités 66.1, 66.2, 68.1, 68.2 des première et deuxième bielles 66, 68 à la semelle 64 ou l'une des semelles 64.

Selon une configuration, les première et deuxième extrémités 66.1, 66.2 de la première bielle 66 s'étendent entre les premier et troisième angles A1, A3 et les première et deuxième extrémités 68.1, 68.2 de la deuxième bielle 68 s'étendent entre les deuxième et quatrième angles A2, A4.

Selon un premier mode de réalisation visible sur les figures 4 et 5, le renfort transversal 60 comprend un cadre extérieur 70 qui s'étend de manière continue sur tout le pourtour du renfort transversal 60 et qui présente une surface extérieure 70SE formant la semelle 64 et une surface intérieure 70SI. Le cadre extérieur 70 s'étend entre un premier bord 70.1 positionné dans un premier plan transversal et un deuxième bord 70.2 positionné dans un deuxième plan transversal, parallèle au premier plan transversal et décalé par rapport à ce dernier selon la direction longitudinale.

Selon un deuxième mode de réalisation visible sur les figures 6 et 7, le renfort transversal 60 comprend quatre cornières en L 72, positionnées au niveau de chaque angle A1 à A4 du renfort transversal 60, qui présente chacune une surface extérieure 72SE formant une semelle 64 et une surface intérieure 72SI. Les quatre cornières en L 72 sont disjointes et sont reliées deux à deux par les première et deuxième bielles 66, 68. Selon une conception, les quatre cornières en L 72 sont identiques et comprennent chacune deux branches 74, 76 présentant chacune une extrémité libre 74.1, 76.1, l'un des longerons supérieur ou inférieur 52, 54 étant plaqué contre l'une des branches 74, 76 et l'un des panneaux latéraux droit ou gauche 56, 58 étant plaqué contre l'autre branche 74, 76.

Les quatre cornières en L 72 présentent des premiers bords 72.1, coplanaires, positionnés dans un premier plan transversal et des deuxièmes bords 72.2 positionnés dans un deuxième plan transversal, parallèle au premier plan transversal et décalé par rapport à ce dernier selon la direction longitudinale.

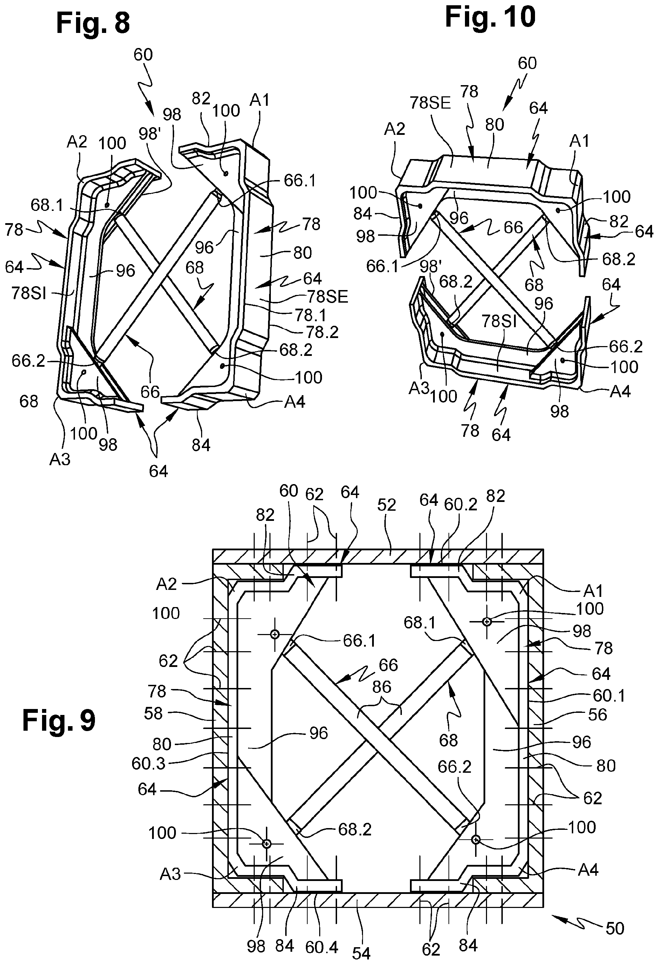

Selon un troisième mode de réalisation visible sur les figures 8 et 9, le renfort transversal 60 comprend deux cornières en U 78 présentant chacune une surface extérieure 78SE formant une semelle 64 et une surface intérieure 78SI. Les deux cornières en U 78 sont disjointes et sont reliées par les première et deuxième bielles 66, 68. Les deux cornières en U 78 sont identiques et comportent chacune une base 80 et deux branches 82, 84. Selon le troisième mode de réalisation, les bases 80 des cornières en U 78 sont plaquées contre les panneaux latéraux droit et gauche 56, 58.

Selon un quatrième mode de réalisation visible sur la figure 10, comme pour le troisième mode de réalisation, le renfort transversal 60 comprend deux cornières en U 78. Selon ce quatrième mode de réalisation, les bases 80 des cornières en U 78 sont plaquées contre les longerons supérieur et inférieur 52, 54.

Les deux cornières en U 78 présentent des premiers bords 78.1, coplanaires, positionnés dans un premier plan transversal et des deuxièmes bords 78.2 positionnés dans un deuxième plan transversal, parallèle au premier plan transversal et décalé par rapport à ce dernier selon la direction longitudinale.

Selon un mode de réalisation, chaque bielle 66, 68 comprend un corps 86 et chacune des premières et deuxièmes extrémités 66.1, 66.2, 68.1, 68.2 des première et deuxième bielles 66, 68 comprend une tête 88 reliée au corps 86 par un raccordement. Selon une première configuration, le raccordement entre chaque tête 88 et le corps 86 est rigide. Selon une autre configuration, au moins une des première et deuxième bielles 66, 68 est réglable en longueur. A cet effet, pour au moins une des première et deuxième bielles 66, 68, au moins un raccordement entre l'une des têtes 88 et le corps 86 est réglable en longueur pour ajuster la longueur entre les deux têtes 88.

Selon une autre caractéristique, chaque système de liaison comprend au moins un voile 90, 92, 92', 94, 94' 96, 98, 98' reliant l'une des premières et deuxièmes extrémités 66.1, 66.2, 68.1, 68.2 des première et deuxième bielles 66, 68 à la semelle 64 ou à l'une des semelles. Selon une conception, chaque voile 90, 92, 92', 94, 94' 96, 98, 98' est une paroi de faible épaisseur, disposée dans un plan transversal, solidaire de la semelle 64 ou de l'une des semelles 64.

Selon une première configuration, chaque système de liaison comprend un voile 90 et la première ou deuxième extrémité de la première ou deuxième bielle 66.1, 66.2, 68.1, 68.3 comprend une fente configurée pour loger le voile 90.

Selon une deuxième configuration, chaque système de liaison comprend deux voiles 92, 92', 94, 94' 96, 98, 98' entre lesquels est positionnée la première ou deuxième extrémité de la première ou deuxième bielle 66.1, 66.2, 68.1, 68.3.

Quelle que soit la configuration, chaque système de liaison comprend un axe de liaison pivotante 100 reliant l'une des extrémités 66.1, 66.2, 68.1, 68.2 des première et deuxième bielles 66, 68 à au moins l'un des voiles 90, 92, 92', 94, 94', 96, 98, 98', ledit axe de liaison pivotante 100 étant orienté approximativement selon une direction longitudinale et configuré pour reprendre notamment des contraintes de cisaillement liées aux efforts de torsion subis par la structure primaire 50.

Bien entendu, l'invention n'est pas limitée à ce mode de réalisation pour le système de liaison 100.

Selon un mode de réalisation visible sur la figure 6, chaque cornière en L 72 présente un unique voile 90 et chaque tête 88 des bielles 66, 68 comprend une fente configurée pour loger le voile 90 d'une des cornières en L 72. Pour les cornières en L 72 reliées à la première bielle 66, le voile 90 est positionné au niveau du premier bord 72.1, a une forme triangulaire et s'étend jusqu'aux extrémités libres 74.1, 76.1 des deux branches 74, 76. Pour les cornières en L 72 reliées à la deuxième bielle 68, le voile 90 est positionné au niveau du deuxième bord 72.2, a une forme triangulaire et s'étend jusqu'aux extrémités libres 74.1, 76.1 des deux branches 74, 76.

Selon un autre mode de réalisation visible sur la figure 4, pour chaque extrémité 66.1, 66.2, 68.1, 68.2 des première et deuxième bielles 66, 68, le cadre extérieur 70 comprend deux voiles espacés de manière à loger ladite extrémité 66.1, 66.2, 68.1, 68.2 et plus particulièrement sa tête 88. Selon une configuration, le cadre extérieur 70 comprend deux voiles principaux 92, 92' qui s'étendent sur deux côtés parallèles du cadre extérieur 70, dans un plan transversal, approximativement à équidistance des premier et deuxième bords 70.1, 70.2, et pour chacune des extrémités 66.1, 66.2, 68.1, 68.2 des première et deuxième bielles 66, 68, des voiles secondaires 94, 94', parallèles aux voiles principaux 92, 92', espacés de ces derniers, ayant une forme approximativement triangulaire. Les voiles secondaires 94 reliés à la première bielle 66 sont décalés par rapport au voile principal 92, 92' vers le premier bord 70.1 alors que les voiles secondaires 94' reliés à la deuxième bielle 68 sont décalés par rapport au voile principal 92, 92' vers le deuxième bord 70.2.

Selon un autre mode de réalisation visible sur les figures 8 et 10, chaque cornière en U 78 comprend un voile principal 96 reliant les deux branches 82, 84, positionné dans un plan transversal, approximativement à équidistance des premier et deuxième bords 78.1, 78.2, et pour chacune des extrémités 66.1, 66.2, 68.1, 68.2 des première et deuxième bielles 66, 68, des voiles secondaires 98, 98', parallèles au voile principal 96, espacés de ce dernier, ayant une forme approximativement triangulaire. Pour chaque cornière en U 78, le voile secondaire 98 relié à la première bielle 66 est décalé par rapport au voile principal 96 vers le premier bord 78.1 alors que le voile secondaire 98' relié à la deuxième bielle 68 est décalé par rapport au voile principal 96 vers le deuxième bord 78.2.

Quel que soit le mode de réalisation, le renfort transversal 60 présente un volume de matière inférieur à celui d'un renfort transversal de l'art antérieur. Par conséquent, la masse de chaque renfort transversal 60 est réduite par rapport à celle des renforts transversaux de l'art antérieur.

Quel que soit le mode de réalisation, les voiles 90, 92, 92', 94, 94', 96, 98, 98' et les bielles 66, 68 libèrent une section de passage importante ce qui facilite l'intégration des éléments à l'intérieur de la structure primaire.

Selon un mode opératoire, chaque renfort transversal 60 est réalisé par forgeage. Dans ce cas, chaque renfort transversal est obtenu à partir d'une ébauche présentant des dimensions inférieures à celles d'une ébauche de l'art antérieur. Par conséquent, le renfort transversal 60 peut être forgé à l'aide d'une presse moins puissante que celle utilisée pour forger les renforts transversaux de l'art antérieur.

Selon un autre avantage, les mêmes bielles 66 et 68 peuvent être utilisées pour tous les renforts transversaux d'une même structure primaire et pour toutes les structures primaires des différents programmes d'avion.

Lorsque le renfort transversal 60 est réalisé à partir d'un cadre extérieur 70, ce dernier est dimensionné en fonction de la section de la structure primaire qui évolue selon la direction longitudinale. Ainsi, les cadres extérieurs 70 d'une même structure primaire sont généralement différents, et les cadres extérieurs 70 ont des dimensions différentes d'un programme d'avion à l'autre.

Lorsque les renforts transversaux 60 comprennent des cornières en U 78 disjointes, certains renforts transversaux 60 d'une même structure primaire, présentant des sections transversales différentes, comprennent des cornières en U 78 identiques. De plus, certaines cornières en U 78 peuvent être communes à des structures primaires de différents programmes d'avion.

Lorsque les renforts transversaux 60 comprennent quatre cornières en L 72, il est possible d'utiliser les mêmes cornières en L 72 pour plusieurs renforts transversaux 60 répartis selon la direction longitudinale d'une même structure primaire et pour les structures primaires de différents programmes d'avion.

## Revendications

1. Structure primaire d'un mât d'aéronef comprenant des longerons supérieur et inférieur (52, 54), des panneaux latéraux droit et gauche (56, 58), des renforts transversaux (60) disposés dans des plans transversaux, présentant chacun un contour carré ou rectangulaire et au moins une semelle (64) contre laquelle sont fixés les longerons supérieur et inférieur (52, 54) ainsi que les panneaux latéraux droit et gauche (56, 58), **caractérisée en ce qu'**au moins un des renforts transversaux (60) de la structure primaire (50) comprend des première et deuxième bielles (66, 68), orientées selon des diagonales du renfort transversal (60), présentant chacune des première et deuxième extrémités (66.1, 66.2, 68.1, 68.2), ainsi que des systèmes de liaison reliant chacune des premières et deuxièmes extrémités (66.1, 66.2, 68.1, 68.2) des première et deuxième bielles (66, 68) à la semelle (64) ou à l'une des semelles (64).

2. Structure primaire selon la revendication 1, **caractérisée en ce qu'**au moins une des première et deuxième bielles (66, 68) est réglable en longueur.

3. Structure primaire selon l'une des revendications 1 à 2, **caractérisée en ce que** chaque système de liaison comprend au moins un voile (90, 92, 92', 94, 94' 96, 98, 98') reliant l'une des premières et deuxièmes extrémités (66.1, 66.2, 68.1, 68.2) des première et deuxième bielles (66, 68) à la semelle (64) ou à l'une des semelles (64), chaque voile (90, 92, 92', 94, 94' 96, 98, 98') étant une paroi de faible épaisseur, disposée dans un plan transversal, solidaire de la semelle (64) ou de l'une des semelles (64) et **en ce que** chaque système de liaison comprend un axe de liaison pivotante (100) reliant l'une des extrémités (66.1, 66.2, 68.1, 68.2) des première et deuxième bielles (66, 68) à au moins l'un des voiles (90, 92, 92', 94, 94', 96, 98, 98'), ledit axe de liaison pivotante (100) étant orienté selon une direction longitudinale.

4. Structure primaire selon la revendication 3, **caractérisée en ce que** chaque système de liaison comprend un voile (90) et la première ou deuxième extrémité (66.1, 66.2, 68.1, 68.3) de la première ou deuxième bielle (66, 68) comprend une fente configurée pour loger le voile (90).

5. Structure primaire selon la revendication 3, **caractérisée en ce que** chaque système de liaison comprend deux voiles (92, 92', 94, 94' 96, 98, 98') entre lesquels est positionnée la première ou deuxième extrémité (66.1, 66.2, 68.1, 68.3) de la première ou deuxième bielle (66, 68).

6. Structure primaire selon l'une des revendications précédentes, **caractérisée en ce que** le renfort transversal (60) comprend un cadre extérieur (70) qui s'étend de manière continue sur tout le pourtour du renfort transversal (60) entre un premier bord (70.1) positionné dans un premier plan transversal et un deuxième bord (70.2) positionné dans un deuxième plan transversal, parallèle au premier plan transversal et décalé par rapport à ce dernier selon une direction longitudinale, ledit cadre extérieur (70) comportant une surface extérieure (70SE) formant la semelle (64).

7. Structure primaire selon la revendication précédente, **caractérisée en ce que** le cadre extérieur (70) comprend deux voiles principaux (92, 92') qui s'étendent sur deux côtés parallèles du cadre extérieur (70), dans un plan transversal, à équidistance des premier et deuxième bords (70.1, 70.2), et pour chacune des extrémités (66.1, 66.2, 68.1, 68.2) des première et deuxième bielles (66, 68), des voiles secondaires (94, 94'), parallèles aux voiles principaux (92, 92'), espacés de ces derniers.

8. Structure primaire selon la revendication précédente, **caractérisée en ce que** les voiles secondaires (94) reliés à la première bielle (66) sont décalés par rapport au voile principal (92, 92') vers le premier bord (70.1) alors que les voiles secondaires (94') reliés à la deuxième bielle (68) sont décalés par rapport au voile principal (92, 92') vers le deuxième bord (70.2).

9. Structure primaire selon l'une des revendications 1 à 5, **caractérisée en ce que** le renfort transversal (60) comprend quatre cornières en L (72), positionnées au niveau de chaque angle (A1 à A4) du renfort transversal (60), disjointes et reliées deux à deux par les première et deuxième bielles (66, 68), chacune des quatre cornières en L (72) présentant une surface extérieure (72SE) formant une semelle (64).

10. Structure primaire selon la revendication précédente, **caractérisée en ce que** les quatre cornières en L (72) présentent des premiers bords (72.1), coplanaires, positionnés dans un premier plan transversal et des deuxièmes bords (72.2) positionnés dans un deuxième plan transversal, parallèle au premier plan transversal et décalé par rapport à ce dernier selon une direction longitudinale et **en ce que** chaque cornière en L (72) présente un unique voile (90), positionné au niveau du premier bord (72.1) pour les cornières en L (72) reliées à la première bielle (66) ou au niveau du deuxième bord (72.2) pour les cornières en L (72) reliées à la deuxième bielle (68).

11. Structure primaire selon l'une des revendications 1 à 5, **caractérisée en ce que** le renfort transversal (60) comprend deux cornières en U (78) disjointes, reliées par les première et deuxième bielles (66, 68), chaque cornière en U (78) présentant une surface extérieure (78SE) formant une semelle (64), une base (80) et deux branches (82, 84).

12. Structure primaire selon la revendication précédente, **caractérisée en ce que** les deux cornières en U (78) présentent des premiers bords (78.1), coplanaires, positionnés dans un premier plan transversal et des deuxièmes bords (78.2) positionnés dans un deuxième plan transversal, parallèle au premier plan transversal et décalé par rapport à ce dernier selon une direction longitudinale et **en ce que** chaque cornière en U (78) comprend un voile principal (96) reliant les deux branches (82, 84), positionné dans un plan transversal, à équidistance des premier et deuxième bords (78.1, 78.2), et pour chacune des extrémités (66.1, 66.2, 68.1, 68.2) des première et deuxième bielles (66, 68), des voiles secondaires (98, 98'), parallèles au voile principal (96), espacés de ce dernier.

13. Structure primaire selon la revendication précédente, **caractérisée en ce que** pour chaque cornière en U (78), le voile secondaire (98) relié à la première bielle (66) est décalé par rapport au voile principal (96) vers le premier bord (78.1) alors que le voile secondaire (98') relié à la deuxième bielle (68) est décalé par rapport au voile principal (96) vers le deuxième bord (78.2).

14. Aéronef comprenant une structure primaire selon l'une des revendications précédentes.

## Patentansprüche

1. Primärstruktur eines Triebwerkträgers eines Luffahrzeuges mit oberen und unteren Trägern (52, 54), rechten und linken Seitenwänden (56, 58), in Querebenen angeordneten Querverstärkungen (60) mit jeweils quadratischem oder rechteckigem Umriss und wenigstens einer Grundfläche (64), an der die oberen und unteren Träger (52, 54) sowie die rechten und linken Seitenwände (56, 58) befestigt sind, **dadurch gekennzeichnet, dass** wenigstens eine der Querverstärkungen (60) der Primärstruktur (50) eine erste und zweite Stange (66, 68) umfasst, die jeweils entlang der Diagonalen der Querverstärkung (60) ausgerichtet ist und die jeweils ein erstes und zweites Ende (66.1, 66.2, 68.1, 68.2) aufweist, und die Verbindungssysteme umfasst, die jedes der ersten und zweiten Enden (66.1, 66.2, 68.1, 68.2) der ersten und zweiten Stange (66, 68) mit der Grundfläche (64) oder mit einer der Grundflächen (64) verbinden.

2. Primärstruktur nach Anspruch 1, **dadurch gekennzeichnet, dass** wenigstens einer der ersten und zweiten Stäbe (66, 68) längenverstellbar ist.

3. Primärstruktur nach einem der Ansprüche 1 bis 2, **dadurch gekennzeichnet, dass** jedes Verbindungssystem wenigstens einen Steg (90, 92, 92', 94, 94', 96, 98, 98') umfasst, der eines der ersten und zweiten Enden (66.1, 66.2, 68.1, 68.2) der ersten und zweiten Stage (66, 68) mit der Grundfläche (64) oder mit einer der Grundflächen (64) verhindert, wobei jeder Steg (90, 92, 92', 94, 94', 96, 98, 98') dünnwandig, in einer Querebene angeordnet und einstückig mit der Grundfläche (64) oder mit einer der Grundflächen (64) fest verbunden ist, und dass jedes Verbindungssystem eine Achse für eine Verschenkverbindung (100) umfasst, die eines der Enden (66.1, 66.2, 68.1, 68.2) der ersten und zweiten Stange (66, 68) mit wenigstens einem der Stege (90, 92, 92', 94, 94', 96, 98, 98') verbindet, wobei die Achsen für die Verschwenkverbindung (100) in Längsrichtung ausgerichtet ist.

4. Primärstruktur nach Anspruch 3, **dadurch gekennzeichnet, dass** jedes Verbindungssystem einen Steg (90) umfasst und dass das erste oder zweite Ende (66.1, 66.2, 68.1, 68.3) der ersten oder zweiten Stange (66, 68) einen Schlitz aufweist, um den Steg (90) aufzunehmen.

5. Primärstruktur nach Anspruch 3, **dadurch gekennzeichnet, dass** jedes Verbindungssystem zwei Stege (92, 92', 94, 94' 96, 98, 98') umfasst, zwischen denen das erste oder zweite Ende (66.1, 66.2, 68.1, 68.3) der ersten oder zweiten Stange (66, 68) angeordnet ist.

6. Primärstruktur nach einem der vorhergehenden Ansprüche, **dadurch gekennzeichnet, dass** die Querverstärkung (60) einen Außenrahmen (70) umfasst, der sich zwischen einem ersten Rand (70.1), der in einer ersten Querebene angeordnet ist, und einem zweiten Rand (70.2), der in einer zweiten Querebene parallel zur ersten Querebene und gegenüber dieser in Längsrichtung versetzt angeordnet ist, durchgehend über den gesamten Umfang der Querverstärkung (60) erstreckt, wobei der Außenrahmen (70) eine Außenfläche (70SE) aufweist, die die Grundfläche bildet (64) .

7. Primärstruktur nach dem vorhergehenden Anspruch, **dadurch gekennzeichnet, dass** der Außenrahmen (70) zwei Hauptstege (92, 92') aufweist, die sich auf zwei parallelen Seiten des Außenrahmens (70) in einer Querebene mit gleichem Abstand zum ersten und zweiten Rand (70.1, 70.2) erstrecken, und für jedes der Enden (66.1, 66.2, 68.1, 68.2) der ersten und zweiten Stange (66, 68), Sekundärstege (94, 94') aufweist, die parallel zu den Hauptstegen (92, 92') verlaufen und von diesen beabstandet sind.

8. Primärstruktur nach dem vorhergehenden Anspruch, **dadurch gekennzeichnet, dass** die mit der ersten Stange (66) verbundenen Sekundärstege (94) vom Hauptsteg (92, 92') in Richtung zum ersten Rand (70.1) versetzt sind, während die mit der zweiten Stange (68) verbundene Sekundärstege (94') vom Hauptsteg (92, 92') in Richtung zum zweiten Rand (70.2) versetzt sind.

9. Primärstruktur nach einem der Ansprüche 1 bis 5, **dadurch gekennzeichnet, dass** die Querverstärkung (60) vier L-förmige Winkel (72) umfasst, die in Bereich jeder Ecke (A1 bis A4) der Querverstärkung (60) unzusammenhängend angeordnet sind und die paarweise durch die erste und zweite Stange (66, 68) verbunden sind, wobei jeder der vier L-förmigen Winkel (72) eine Außenfläche (72SE) aufweist, die eine Grundfläche (64) bildet.

10. Primärstruktur nach dem vorhergehenden Anspruch, **dadurch gekennzeichnet, dass** die vier L-förmigen Winkel (72) koplanare erste Kanten (72.1) aufweisen, die in einer ersten Querebene angeordnet sind, und zweite Kanten (72.2) aufweisen, die in einer zur ersten Querebene parallelen und zu dieser in Längsrichtung versetzten zweiten Querebene angeordnet sind, und dass jeder L-förmige Winkel (72) einen einzigen Steg (90) aufweist, der im Bereich der ersten Kante (72.1) für die L-förmige Winkel (72) angeordnet ist, die mit der ersten Stange (66) verbunden sind, oder im Bereich der zweiten Kante (72.2) für die L-förmigen Winkel (72) angeordnet ist, die mit der zweiten Stange (68) verbunden sind.

11. Primärstruktur nach einem der Ansprüche 1 bis 5, **dadurch gekennzeichnet, dass** die Querverstärkung (60) aus zwei getrennten U-förmigen Winkeln (78) besteht, die durch die erste und zweite Stange (66, 68) verbunden sind, wobei jeder U-förmige Winkel (78) eine Außenfläche (78SE), die eine Grundfläche (64) bildet, eine Basis (80) und zwei Schenkel (82, 84) aufweist.

12. Primärstruktur nach dem vorhergehenden Anspruch, **dadurch gekennzeichnet, dass** die beiden U-förmigen Winkel (78) koplanare erste Kanten (78.1)aufweisen, die in einer ersten Querebene angeodnet sind, und zweite Kanten (78.2) aufweisen, die in einer zur ersten Querebene parallelen und zu dieser in Längsrichtung versetzten zweiten Querebenen angeordnet sind, und dass jeder U-förmige Winkel (78) einen die beiden Schenkel (82, 84) verbindenden Hauptsteg (96) aufweist, der in einer Querebene im gleichen Abstand zur ersten und zweiten Kante (78.1, 78.2) angeordnet ist, und für jedes der Enden (66.1, 66.2, 68.1, 68.2) der ersten und zweiten Stange (66, 68) Sekundärstege (98, 98') aufweist, die parallel zum Hauptsteg (96) verlaufen und von diesem beabstandet sind.

13. Primärstruktur nach dem vorhergehenden Anspruch, **dadurch gekennzeichnet, dass** für jeden U-förmigen Winkel (78) der mit der ersten Stange (66) verbundene Sekundärsteg (98) vom Hauptsteg (96) zur ersten Kante (78.1) hin versetzt ist, während der Nebensteg (98'), der mit der zweiten Stange (68) verbunden ist, vom Hauptsteg (96) in Richtung der zweiten Kante (78.2) versetzt ist.

14. Flugzeug mit einer Primärstruktur nach einem der vorhergehenden Ansprüche.

## Claims

1. Primary structure of an aircraft pylon, comprising upper and lower spars (52, 54), right-hand and left-hand lateral panels (56, 58), and transverse reinforcers (60) that are disposed in transverse planes and each have a square or rectangular contour and at least one sole (64) to which the upper and lower spars (52, 54) and the right-hand and left-hand lateral panels (56, 58) are fastened, **characterized in that** at least one of the transverse reinforcers (60) of the primary structure (50) comprises first and second link rods (66, 68) that are oriented along diagonals of the transverse reinforcer (60) and each have first and second ends (66.1, 66.2, 68.1, 68.2), and connecting systems that each connect first and second ends (66.1, 66.2, 68.1, 68.2) of the first and second link rods (66, 68) to the sole (64) or to one of the soles (64).

2. Primary structure according to Claim 1, **characterized in that** at least one of the first and second link rods (66, 68) is variable in length.

3. Primary structure according to either of Claims 1 and 2, **characterized in that** each connecting system comprises at least one web (90, 92, 92', 94, 94' 96, 98, 98') that connects one of the first and second ends (66.1, 66.2, 68.1, 68.2) of the first and second link rods (66, 68) to the sole (64) or to one of the soles (64), each web (90, 92, 92', 94, 94' 96, 98, 98') being a wall of small thickness, disposed in a transverse plane, that is secured to the sole (64) or to one of the soles (64), and **in that** each connecting system comprises a pivoting connecting pin (100) that connects one of the ends (66.1, 66.2, 68.1, 68.2) of the first and second link rods (66, 68) to at least one of the webs (90, 92, 92', 94, 94', 96, 98, 98'), said pivoting connecting pin (100) being oriented in a longitudinal direction.

4. Primary structure according to Claim 3, **characterized in that** each connecting system comprises a web (90) and the first or second end (66.1, 66.2, 68.1, 68.3) of the first or second link rod (66, 68) comprises a slot configured to accommodate the web (90).

5. Primary structure according to Claim 3, **characterized in that** each connecting system comprises two webs (92, 92', 94, 94' 96, 98, 98'), between which the first or second end (66.1, 66.2, 68.1, 68.3) of the first or second link rod (66, 68) is positioned.

6. Primary structure according to one of the preceding claims, **characterized in that** the transverse reinforcer (60) comprises an outer frame (70) that extends continuously around the entire perimeter of the transverse reinforcer (60) between a first edge (70.1) positioned in a first transverse plane and a second edge (70.2) positioned in a second transverse plane, which is parallel to the first transverse plane and offset with respect to the latter in a longitudinal direction, said outer frame (70) having an outer surface (70SE) forming the sole (64).

7. Primary structure according to the preceding claim, **characterized in that** the outer frame (70) comprises two main webs (92, 92') that extend on two parallel sides of the outer frame (70), in a transverse plane, equidistantly from the first and second edges (70.1, 70.2), and, for each of the ends (66.1, 66.2, 68.1, 68.2) of the first and second link rods (66, 68), secondary webs (94, 94') that are parallel to the main webs (92, 92') and spaced apart from the latter.

8. Primary structure according to the preceding claim, **characterized in that** the secondary webs (94) connected to the first link rod (66) are offset towards the first edge (70.1) with respect to the main web (92, 92') while the secondary webs (94') connected to the second link rod (68) are offset towards the second edge (70.2) with respect to the main web (92, 92').

9. Primary structure according to one of Claims 1 to 5, **characterized in that** the transverse reinforcer (60) comprises four L-shaped brackets (72) that are positioned at each corner (A1 to A4) of the transverse reinforcer (60), are separate from one another and connected in pairs by the first and second link rods (66, 68), each of the four L-shaped brackets (72) having an outer surface (72SE) forming a sole (64).

10. Primary structure according to the preceding claim, **characterized in that** the four L-shaped brackets (72) have first, coplanar edges (72.1) that are positioned in a first transverse plane, and second edges (72.2) that are positioned in a second transverse plane that is parallel to the first transverse plane and offset in a longitudinal direction with respect to the latter, and **in that** each L-shaped bracket (72) has a single web (90), which is positioned at the first edge (72.1) for the L-shaped brackets (72) connected to the first link rod (66) or at the second edge (72.2) for the L-shaped brackets (72) connected to the second link rod (68).

11. Primary structure according to one of Claims 1 to 5, **characterized in that** the transverse reinforcer (60) comprises two separate U-shaped brackets (78) that are connected by the first and second link rods (66, 68), each U-shaped bracket (78) having an outer surface (78SE) that forms a sole (64), a base (80) and two legs (82, 84).

12. Primary structure according to the preceding claim, **characterized in that** the two U-shaped brackets (78) have first, coplanar edges (78.1) that are positioned in a first transverse plane, and second edges (78.2) that are positioned in a second transverse plane that is parallel to the first transverse plane and offset in a longitudinal direction with respect to the latter, and **in that** each U-shaped bracket (78) comprises a main web (96) that connects the two legs (82, 84) and is positioned in a transverse plane, equidistantly from the first and second edges (78.1, 78.2), and, for each of the ends (66.1, 66.2, 68.1, 68.2) of the first and second link rods (66, 68), secondary webs (98, 98') that are parallel to the main web (96) and spaced apart from the latter.

13. Primary structure according to the preceding claim, **characterized in that**, for each U-shaped bracket (78), the secondary web (98) connected to the first link rod (66) is offset towards the first edge (78.1) with respect to the main web (96) while the secondary web (98') connected to the second link rod (68) is offset towards the second edge (78.2) with respect to the main web (96).

14. Aircraft comprising a primary structure according to one of the preceding claims.
